(19) **Europäisches Patentamt / European Patent Office / Office européen des brevets**

(11) **EP 2 699 001 B1**

(12) **EUROPEAN PATENT SPECIFICATION**

(45) Date of publication and mention
of the grant of the patent:
**06.05.2015 Bulletin 2015/19**

(21) Application number: **13180012.0**

(22) Date of filing: **12.08.2013**

(51) Int Cl.:
*H04N 19/52* (2014.01)   *H04N 19/157* (2014.01)
*H04N 19/593* (2014.01)   *H04N 19/513* (2014.01)
*H04N 19/176* (2014.01)   *H04N 19/147* (2014.01)
*H04N 19/61* (2014.01)   *H04N 19/109* (2014.01)
*H04N 19/19* (2014.01)

(54) **A method and a system for video signal encoding and decoding with motion estimation**

Verfahren und System zur Videosignalcodierung und -decodierung mit Bewegungsschätzung

Procédé et système de codage et de décodage de signaux vidéo avec estimation de mouvement

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.08.2012 PL 40034412**

(43) Date of publication of application:
**19.02.2014 Bulletin 2014/08**

(73) Proprietor: **Politechnika Poznanska
60-965 Poznan (PL)**

(72) Inventors:
• **Siast, Jakub
66-440 Skwierzyna (PL)**
• **Domanski, Marek
61-615 Poznan (PL)**

(74) Representative: **Pawlowski, Adam
Eupatent.PL
ul. Zeligowskiego 3/5
90-752 Lodz (PL)**

(56) References cited:
**WO-A1-2011/047994    WO-A1-2011/115659
WO-A1-2012/045225**

• **FUKUSHIMA S ET AL: "Merge based mvd transmission", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-F373, 1 July 2011 (2011-07-01), XP030009396,**
• **TAN Y H ET AL: "CE9: Skip/Merge Simplification with Reduced Candidate Set (Test L)", 20110310, no. JCTVC-E102, 10 March 2011 (2011-03-10) , XP030008608, ISSN: 0000-0007**
• **JOEL JUNG ET AL: "Competition-Based Scheme for Motion Vector Selection and Coding", 29. VCEG MEETING; 77. MPEG MEETING; 17-07-2006 - 17-07-2006; KLAGENFURT, AT; (VIDEO CODING EXPERTS GROUP OF ITU-T SG.16),, no. VCEG-AC06r1, 2 August 2006 (2006-08-02), XP030003490, ISSN: 0000-0446**
• **JINGJING DAI ET AL: "An efficient motion vector coding algorithm based on adaptive motion vector prediction", 90. MPEG MEETING; 26-10-2009 - 30-10-2009; XIAN; (MOTION PICTURE EXPERT GROUP OR ISO/IEC JTC1/SC29/WG11),, no. M16862, 23 October 2009 (2009-10-23), XP030045452,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method and a system for video signal encoding and decoding with motion estimation. It relates to the technical field of video compression.

One of the recent developments in video compression is High Efficiency Video Coding (HEVC), which utilizes intra-pictures prediction with motion compensation and advanced methods of motion vectors prediction. HEVC has been described in details in: "High Efficiency Video Coding (HEVC) text specification draft 10 (for FDIS & Consent)" by B. Bross et al (JCTVC-L1003, Geneva, January 2013).

In HEVC, a picture is coded in blocks. The basic block, for which motion compensation prediction is performed, is called a Prediction Unit (PU). When coding a PU with motion compensation, the PU is assigned information related to its motion and a residual signal.

The residual signal describes a difference between values of pixels of the coded block and the values of pixels of the block resulting from motion compensation. In HEVC, a block may be coded in a SKIP mode, wherein no residual signal is sent for the block or not in a SKIP mode, wherein there is some residual signal sent for the block.

Motion information comprises motion vectors (MV) and reference image indexes (RefIdx). The process of searching the motion vector is called motion estimation (ME). In that process, a reference block is searched for a particular block PUx and indicated by a motion vector MVx such as to minimize the cost function defined by HEVC as:

$$J_{\text{pred,SATD}} = SATD + \lambda_{\text{pred}} * B_{\text{pred}} \quad (1)$$

wherein SATD (a sum of absolute transformed differences) represents the measure of non-matching of the points of the reference block to the values of points of the coded block, $\lambda_{\text{pred}}$ represents the Lagrange's coefficient and $B_{\text{pred}}$ represents the number of bits necessary to code motion information.

The motion vector $MV_x$ itself is prediction-coded, using motion vectors assigned to PU blocks which have been coded previously and are neighboring to the coded block $PU_x$. The motion vectors of the neighboring blocks PU form a list of motion vector predictions $L_{MVXpred}$ for the block $PU_x$. Before the motion vectors of the neighboring blocks $PU_Y$ are inserted to $L_{MVXpred}$, they are scaled according to the temporal distance between current frame and reference frame pointed by neighboring $PU_Y$ reference frame index and current $PU_X$ reference index. After scaling all predictions in $L_{MVXpred}$ represent the same temporal distance. In HEVC $L_{MVXpred}$ has a fixed length and if not enough predictions can be found at this point, then generated motion vectors are inserted to fill it. For example, a zero motion vector can be added as a prediction. In the bitstream, the motion vector $MV_x$ is represented using an index $L_{Idx}$ of motion vector prediction on the list of predictions $L_{MVXpred}$ and a possible correction $dMV_x$ for the vector resulting from the prediction. When the prediction block is coded in a MERGE mode, the correction $dMV_x$ for the vector resulting from the prediction equals zero and is not transmitted. The motion vector predictions may have higher or lower quality. The quality of motion vector predictions is understood as generating the lowest coding cost J for the block PU for the particular prediction.

When a block is coded with motion compensation, when keeping a constant quality of the coded block, the number of bits B decreases as the quality of motion vectors predictions is increased.

US2011176611 discloses a method for decoder-side motion vector derivation (DMVD) that includes: checking a block size of a current block to be encoded and accordingly generating a checking result; and utilizing a DMVD module to refer to the checking result to control conveyance of first DMVD control information which is utilized for indicating whether a DMVD coding operation is employed to encode the current block. When the checking result indicates a predetermined criterion is satisfied, the first DMVD control information is sent in a bitstream; otherwise, the first DMVD control information is not sent.

US2012134416 discloses a method and apparatus for deriving a temporal motion vector predictor (MVP). The predictor is derived for a current block of a current picture in Inter, or Merge, or Skip mode based on co-located reference blocks of a co-located block. The co-located reference blocks comprise the above-left reference block of the bottom-right neighboring block of the co-located block. The reference motion vectors associated with the co-located reference blocks are received and used to derive the temporal MVP.

US2012128060 discloses an apparatus and method for deriving a motion vector predictor or a motion vector predictor candidate or a motion vector or a motion vector candidate for a current block.

US2011002390 discloses a method and apparatus for deriving a motion vector at a video decoder. A block-based motion vector may be produced at the video decoder by utilizing motion estimation among available pixels relative to blocks in one or more reference frames. A motion vector $MV_{PRED}$ which is found for a neighboring block Y is used to determine the motion vector for block X. The procedure is carried out for all blocks, which imposes significant load to the decoder apparatus.

WO2011/047994 presents a method for coding a current block of a sequence of images comprising the following steps: determining at least one candidate motion vector associated with a neighboring block of said current block, determining a prediction motion vector from the candidate motion vector, and coding the current block from the prediction motion vector. The prediction motion vector is determined according to the following steps: determining, for the candidate motion vector, a corrective motion vector so as to minimize a distortion calculated between the neighboring block successively coded and reconstructed and a prediction block motion compensated by the at least one candidate motion vector modified by the corrective motion vector, and determining the prediction motion vector from the candidate motion vector modified by the corrective motion vector.

The aim of the invention is to improve the methods for deriving a motion vector in order to decrease the bandwidth necessary to transmit the stream coded with motion estimation.

The object of the invention is a computer-implemented method for video signal encoding with motion estimation and frames division into prediction units. The method comprises the steps of: determining the current prediction unit ($PU_X$) to be encoded, creating a list ($L_{MVXpred}$) comprising motion vector predictions ($MV_{PUY}$) in neighboring units ($PU_Y$), selecting from the list ($L_{MVXpred}$) the motion vector prediction which is the best according to a predetermined cost function for encoding the current prediction unit ($PU_X$), using the selected prediction number to encode the current prediction unit ($PU_X$). The method is characterized by further comprising the steps of: for each neighboring unit ($PU_Y$), checking whether the neighboring unit ($PU_Y$) has been encoded in the MERGE and not SKIP mode and if so, determining a reconstruction motion vector ($MV_{PUYrec}$) for that unit ($PU_Y$) as a motion vector which minimizes difference between reconstructed prediction block and a block in a reference frame pointed by this motion vector, and assigning the reconstruction motion vector ($MV_{PUYrec}$) as a motion vector ($MV_{PUY}$) to that unit ($PU_Y$) to be used in creating the list ($L_{MVXpred}$).

The object of the invention is also a computer program comprising program code means for performing all the steps of the method for video signal encoding according to the invention when said program is run on a computer.

Another object of the invention is a computer-implemented method for video signal decoding with motion estimation and working with the video signal comprising frames divided into prediction units. The method comprises the steps of: determining the current prediction unit ($PU_X$) to be decoded, determining from the encoded stream information a neighboring unit ($PU_Y$) whose motion vector shall be used to decode the current prediction unit ($PU_X$), using the motion vector ($MV_{PUY}$) of the neighboring unit ($PU_Y$) to decode motion information in the current prediction unit ($PU_X$) The method is characterized by further comprising the steps of: checking whether the neighboring unit ($PU_Y$) has been encoded in a MERGE and not SKIP mode and if so, determining the reconstruction motion vector ($MV_{PUYrec}$) for that unit ($PU_Y$) as a motion vector which minimizes difference between reconstructed prediction block and a block in a reference frame pointed by this motion vector, and assigning the reconstruction motion vector ($MV_{PUYrec}$) as a motion vector ($MV_{PUY}$) for that unit ($PU_Y$) to be used in decoding the current prediction unit ($PU_X$) motion information.

The object of the invention is also a computer program comprising program code means for performing all the steps of the method for video signal decoding according to the invention when said program is run on a computer.

A further object of the invention is a computer-implemented method for transmitting a video signal, comprising the steps of encoding the video signal according to the method of the invention and decoding the video signal according to the method of the invention.

The object of the invention is also video signal encoder utilizing motion estimation and frames division into prediction units. The encoder comprises: a motion estimation unit configured to: determine the current prediction unit ($PU_X$) to be encoded, create a list ($L_{MVXpred}$) comprising motion vector predictions ($MV_{PUY}$) of neighboring units ($PU_Y$), select from the list ($L_{MVXpred}$) the motion vector prediction which is the best according to a predetermined cost function for encoding the current prediction unit ($PU_X$),, use the selected prediction number to encode the current prediction unit ($PU_X$). The encoder further comprises a prediction correction unit. The prediction correction unit is configured to: for each neighboring unit ($PU_Y$), check whether the neighboring unit ($PU_Y$) has been encoded in the MERGE mode and not in a SKIP mode and if so, determine the reconstruction motion vector ($MV_{PUYrec}$) for that unit ($PU_Y$) as a motion vector which minimizes difference between reconstructed prediction block and a block in a reference frame pointed by this motion vector. The reconstruction motion vector ($MV_{PUYrec}$) is used as a motion vector ($MV_{PUY}$) to that unit ($PU_Y$) to be used in creating the list ($L_{MVXpred}$).

Another object of the invention is a video signal decoder utilizing motion estimation and working with the video signal comprising frames divided into prediction units. The decoder comprises: a motion estimation unit configured to: determine the current prediction unit ($PU_X$) to be decoded, determine from the encoded stream information a neighboring unit ($PU_Y$) whose motion vector shall be used to decode the current prediction unit ($PU_X$), use the motion vector ($MV_{PUY}$) of the neighboring unit ($PU_Y$) to decode motion information in the current prediction unit ($PU_X$). The decoder is **characterized in that** it further comprises: a prediction correction unit configured to: check whether the neighboring unit ($PU_Y$) has been encoded in a MERGE and not SKIP mode and if so, determine the reconstruction motion vector ($MV_{PUYrec}$) for that unit ($PU_Y$) as a motion vector which minimizes difference between reconstructed prediction block and a block in a reference frame pointed by this motion vector. The reconstruction motion vector ($MV_{PUYrec}$) is used to get a motion vector ($MV_{PUY}$) for that unit to be used in decoding the current prediction unit ($PU_X$).

The invention further relates to a video signal transmission system, comprising the video signal encoder according to the invention and a video signal decoder according to the invention.

The invention is shown by means of exemplary embodiments on a drawing, in which:

Fig. 1 shows a structure of a HEVC encoder according to the invention;
Fig. 2 shows a structure of a HEVC decoder according to the invention;
Fig. 3 shows exemplary sequence of frames;
Fig. 4 shows an procedure of operation of encoder prediction correction block;
Fig. 5 shows an procedure of operation of decoder prediction correction block.

The description will now introduce a HEVC encoder and decoder as a background to the invention, and after that a detailed description of new elements added to the HEVC will be introduced. It is to be understood that HEVC is described here only as an exemplary embodiment of the invention. The invention can be carried out with other video compression techniques which utilize motion estimation.

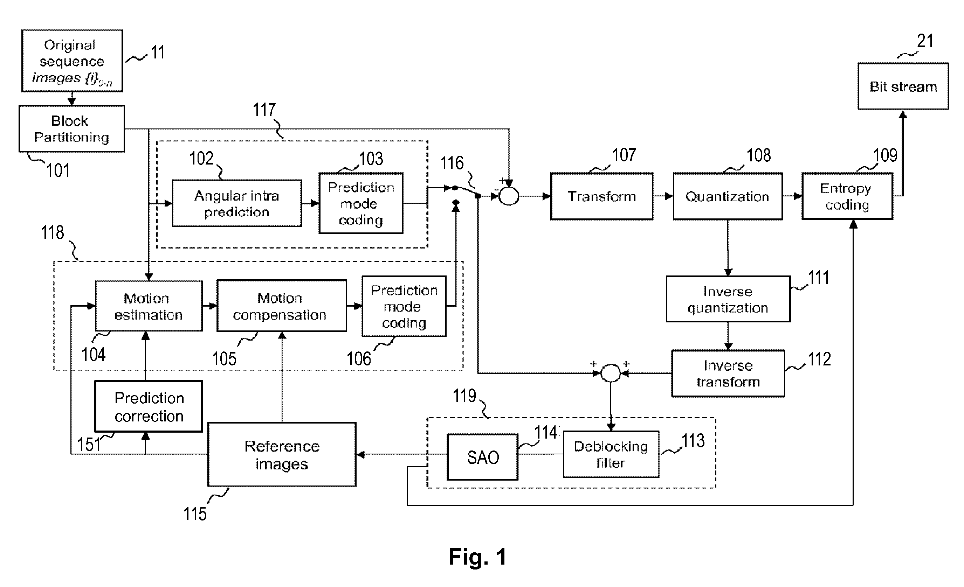

Fig. 1 shows a structure of a HEVC encoder according to the invention. It is equivalent to a structure of a standard HEVC encoder disclosed in US20120230397, wherein an ALF filter has been replaced by a SAO filter 114, and wherein new prediction correction unit 151 according to the invention has been introduced.

Each frame of the original video sequence 11 is first divided into a grid of coding units (CU) during stage 101 and slices and tiles are defined. In general, two methods define slice boundaries by either defining a given number of CUs per slices (entropy or coding slices) or a given number of bytes per slice. Tiles boundaries are defined by spatial division of an frame into rectangular sections. The subdivision of an LCU into CUs and the partitioning of a CU into TUs and PUs are determined based on a rate distortion criterion. Each PU of the CU being processed is predicted spatially by an "Intra" predictor 117, or temporally by an "Inter" predictor 118. Each predictor is a block of pixels issued from the same image or another image, from which a difference block (or "residual") is derived.

The encoded images can be of two types: temporal predicted images which can be either predicted from one or more reference images in one direction are called P-frames or predicted from at least two reference frames in two directions (forward and backward) are called B-frames; and non-temporal predicted frames called Intra frames or I-frames. In I-frames, only Intra prediction is considered for coding CUs/PUs. In P-frames and B-frames, Intra and Inter prediction are considered for coding CUs/PUs.

In the "Intra" prediction processing module 117, the current block is predicted by means of an "Intra" predictor which corresponds to a block of pixels constructed from the information of the current image already encoded. The module 102 determines an intra prediction mode that is used to predict pixels of a current PU to encode from neighboring PUs pixels. In HEVC, Planar, DC and up to 33 angular modes are available. A residual PU is obtained by computing the difference between the intra predicted PU and current PU of pixels. An intra-predicted PU therefore comprises a intra prediction mode with a residual. The coding of the intra prediction mode is partly inferred from the prediction mode of neighboring prediction units. This inferring process 103 of prediction mode enables the coding rate of the intra prediction direction mode to be reduced. The Intra prediction processing module 117 also uses the spatial dependencies of the frame for predicting the pixels and for inferring the intra prediction direction of the prediction unit.

With regard to the second processing module 118 that is "Inter" coding, two prediction types are possible. Mono-prediction (P-type) entails predicting the PU by referring to one reference area from one reference picture. Biprediction (B-type) entails predicting the PU by referring to two reference areas from one or two reference pictures. In HEVC, B-type frames have been generalized and replace P-type frames which now predict the PU by referring to two reference areas in one reference picture. An estimation of motion 104 between the current PU and reference images 115 is made in order to identify, in one or several of these reference images, one (for P-type) or several (for B-type) areas of pixels to use them as predictors of this current PU. In the case where several areas predictors are used (B-type), they are merged to generate one single prediction. The reference images are images in the video sequence that have already been coded and then reconstructed (by decoding).

The reference area is identified in the reference frame by a motion vector that is equal to the displacement between the PU in current frame and the reference area. The next stage 105 of the inter prediction process involves computing the difference between the prediction area and the current PU. This difference is the residual of the inter predicted PU. At the end of the inter prediction process the current PU is composed of one motion vector and a residual.

By virtue of spatial dependencies of movement between neighboring PUs, HEVC provides a method to predict the motion vectors of each PU. Several motion vector predictions are employed: typically, the motion vector of the PU localized on the top of, the left of or the top left corner of the current PU are a first set of spatial predictions. One temporal motion vector candidate is also used that is the one of the collocated PU (i.e. the PU at the same coordinate) in a reference frame. The coder then removes predictions that are equal within the set of candidates. It selects one of the predictions based on a criterion that minimizes the difference between the MV prediction and that of the current PU. In HEVC, this process is referred to as Advanced Motion Vector Prediction (AMVP). Finally, the current PU's motion vector is coded 106 with an index that identifies the prediction within the set of candidates and a MV difference MVD of PU's MV with the selected MV prediction candidate. The inter prediction processing module also relies on spatial dependencies between motion information of prediction units to increase the compression ratio of inter predicted coding units.

These two types of codings thus supply several texture residuals (the difference between the current PU and the predictor), which are compared in a module 116 for selecting the best coding mode.

The residual obtained at the end of an inter or intra prediction process is then transformed in module 107. The transform applies to a Transform Unit TU that is included in a CU. A TU can be further split into smaller TUs using a so-called Residual QuadTree (RQT) decomposition 107. In HEVC, generally 2 or 1 levels of decompositions are used and authorized transform sizes are from 32*32, 16*16, 8*8 and 4*4. The transform basis is derived from a discrete cosine transform DCT.

The residual transformed coefficients are then quantized 108. The coefficients of the quantized transformed residual are then coded by means of an entropy coding process 109 and then inserted into the compressed bit stream 21. Coding syntax elements are also coded by entropy encoding 109. This processing module uses spatial dependencies between syntax elements to increase the coding efficiency.

In order to calculate the "Intra" predictors or to make an estimation of the motion for the "Inter" predictors, the encoder performs a decoding of the PUs already encoded by means of a so-called "decoding" loop 111, 112, 113, 114, 115. This decoding loop makes it possible to reconstruct the PUs and images from the quantized transformed residuals.

Thus the quantized transformed residual is dequantized 111 by applying the inverse quantization to that provided at quantization step 108 and reconstructed 112 by applying the inverse transform to that of the step 107.

If the residual comes from an "Intra" coding process 117, the used "Intra" predictor is added to this residual in order to recover a reconstructed PU corresponding to the original PU modified by the losses resulting from a transformation with loss, for example in this case the quantization operations.

If on the other hand the residual comes from an "Inter" coding 118, the areas pointed to by the current motion vectors (these areas belong to the reference images 115 referred by the current image indices) are merged then added to this decoded residual. In this way the original PU is modified by the losses resulting from the quantization operations.

A final loop filter processing module 119 is applied to the reconstructed signal in order to reduce the effects created by heavy quantization of the residuals obtained and to improve the signal quality. The loop filter processing module comprises two steps, a "deblocking" filter and a linear filtering. The deblocking filter 113 smoothes the borders between the PUs and TUs in order to visually attenuate the high frequencies created by the coding. Such a filter being known to a skilled person, it will not be described in any further detail here. The sample adaptive offset (SAO) 114 filter further improves the signal using filter coefficients adaptively determined. The coefficients of the filters are coded and transmitted in the bitstream. The filter 119 is thus applied to an image when all the PUs of pixels of the image have been decoded. The filtering process is performed on a frame by frame basis and uses several pixels around the pixel to be filtered. This processing module 119 also uses spatial dependencies between pixels of the frame.

The filtered images, also known as reconstructed images, are then stored as reference images 115 in order to allow the subsequent "Inter" predictions taking place during the compression of the subsequent images of the current video sequence.

In the context of HEVC, it is possible to use several reference images 115 for the estimation and motion compensation of the current image. In other words, the motion estimation is carried out on N images. Thus the best "Inter" predictors of the current PU, for the motion compensation, are selected in some of the multiple reference images. Consequently two adjoining PUs may have two predictor PUs that come from two distinct reference images. This is particularly the reason why, in the compressed bit stream, the index of the reference image (in addition to the motion vector) used for the predictor area is indicated.

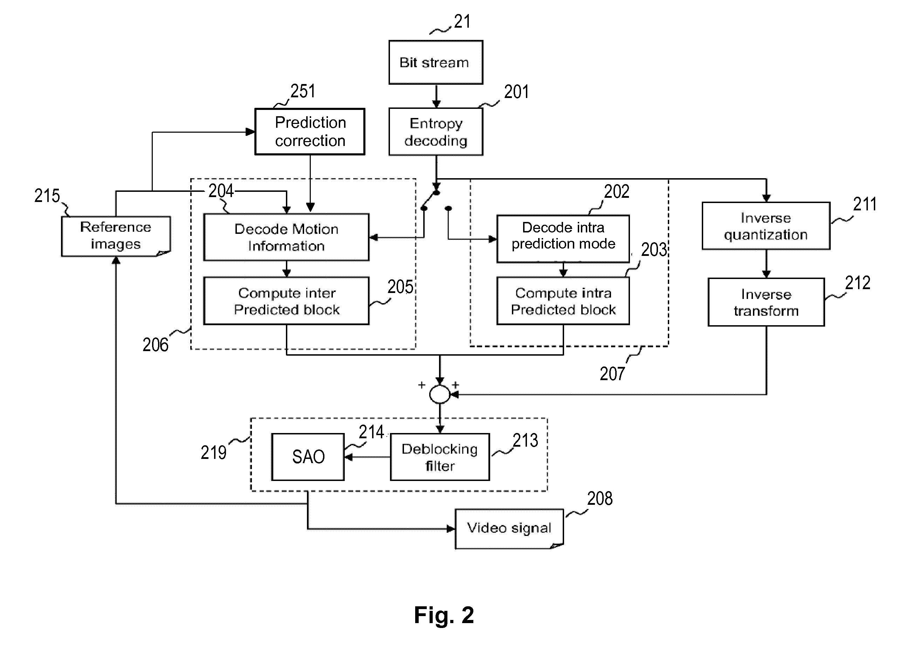

Fig. 2 shows a structure of a HEVC decoder according to the invention. It is equivalent to a structure of a standard HEVC decoder disclosed in US20120230397, wherein an ALF filter has been replaced by a SAO filter 214, and wherein new prediction correction unit 251 according to the invention has been introduced.

The decoder receives as an input a bit stream 21 corresponding to a video sequence 11 compressed by an encoder of the HEVC type, such as the one in FIG. 1. During the decoding process, the bit stream 21 is first of all parsed with help of the entropy decoding module 201. This processing module uses the previously entropy decoded elements to decode the encoded data. It decodes in particular the parameter sets of the video sequence to initialize the decoder and also decodes LCUs of each video frame. Each NAL unit that corresponds to coding slices or entropy slices is then decoded. The parsing process that comprises entropy decoding 201, decode intra prediction mode 202 and decode motion information 204 stages can be done in parallel for each slice but PU prediction processes module 205 and 203 and loop filter module are preferably sequential to avoid issues of neighboring data availability.

The partition of the LCU is parsed and CU, PU and TU subdivision are identified. The decoder successively processes each CU by intra 207 or inter 206 processing modules, inverse quantization and inverse transform modules and finally loop filter processing module 219.

The "Inter" or "Intra" coding mode for the current block is parsed from the bit stream 21 with help of the parsing process module. Depending on the coding mode, either intra prediction processing module 207 or inter prediction processing module 206 is employed. If the coding mode of the current block is "Intra" type, the intra prediction mode is extracted from the bit stream and decoded with help of neighbors' prediction mode during stage 204 of intra prediction processing module 207. The intra predicted block is then computed 203 with the decoded intra prediction mode and the already decoded pixels at the boundaries of current PU. The residual associated with the current block is recovered from the bit stream and then entropy decoded 201.

If the coding mode of the current PU indicates that this PU is of "Inter" type, the motion information is extracted from the bit stream and decoded 204. AMVP process is performed during step 204. Motion information of neighbors PU already decoded are also used to compute the motion vector of current PU. This motion vector is used in the reverse motion compensation module 205 in order to determine the "Inter" predictor PU contained in the reference images 215 of the decoder. In a similar manner to the encoder, these reference images 215 are composed of images that precede in decoding order the image currently being decoded and that are reconstructed from the bit stream (and therefore decoded previously).

The next decoding step consists in decoding the residual block that has been transmitted in the bitstream. The parsing module 201 extracts the residual coefficients from the bitstream and performs successively the inverse quantization 211 and inverse transform 212 to obtain the residual PU. This residual PU is added to the predicted PU obtained at output of intra or inter processing module.

At the end of the decoding of all the PUs of the current image, the loop filter processing module 219 is used to eliminate the block effects and improve the signal quality in order to obtain the reference images 215. As done at the encoder, this processing module employs the deblocking filter 213 and then the SAO filter 214.

The images thus decoded constitute the output video signal 31 of the decoder, which can then be displayed and used.

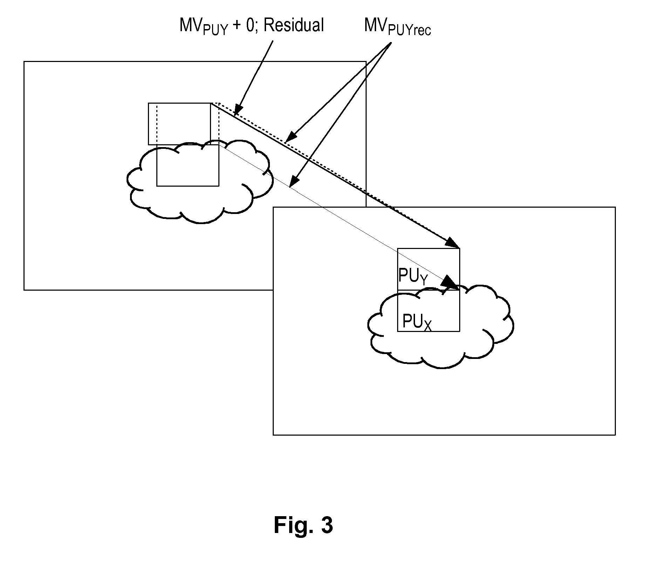

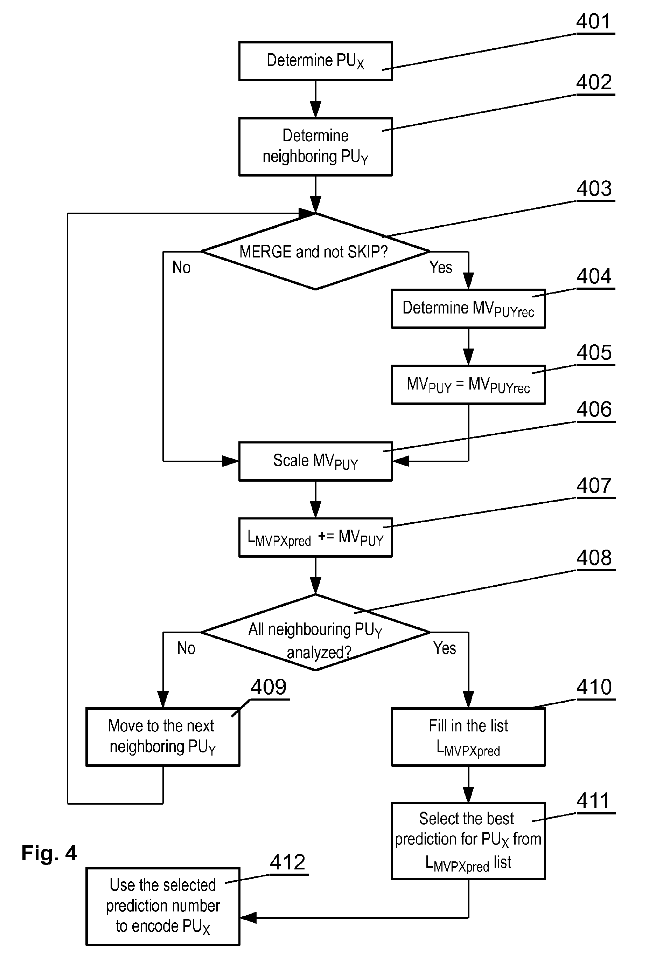

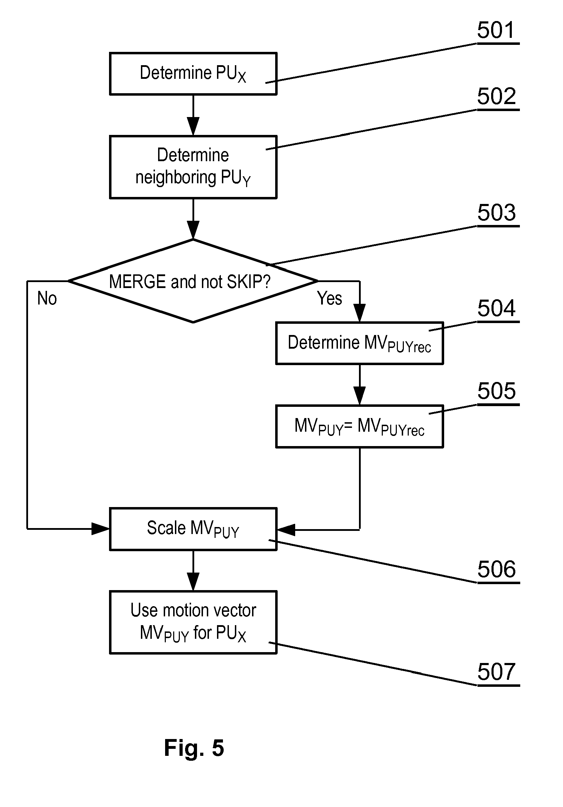

In the present invention, the standard HEVC encoder and HEVC decoder have been improved by adding a prediction correction units 151, 251, which operate according to procedures shown in Figs. 4 and 5, respectively, wherein Fig. 3 shows an exemplary sequence of frames to better understand the operation of the prediction correction blocks.

The encoder motion estimation unit 104 and the encoder prediction correction unit 151 operate jointly as shown in Fig. 4. For a current prediction unit $PU_x$ identified in step 401, a first neighboring prediction unit $PU_Y$ is searched in step 402 in the reconstructed portion of the sequence. The neighboring blocks $PU_Y$ are selected according to a known method, for example to a standard method according to the HEVC encoder rules. $PU_Y$ can be a block in the same frame or a previously reconstructed frame such that its motion vector can be a motion vector prediction for $PU_X$. It is then checked in step 403 whether the neighboring unit $PU_Y$ has been encoded in a MERGE and not SKIP mode. In other words, the neighboring unit $PU_Y$ must satisfy the following criteria:

- it must have a motion vector correction $dMV_Y$ equal to zero (MERGE)
- some residual signal must be sent for the block (not SKIP)

Blocks that satisfy the above criteria have been coded such because the cost function indicated that it is more efficient to send a residual signal for the block than to correct the motion vector. In order to improve the image quality, instead of using the motion vector of the neighboring unit $PU_Y$ as a motion vector prediction for the current unit $PU_X$, the reconstruction motion vector $MV_{PUYrec}$ is determined in step 404. The reconstruction motion vector $MV_{PUYrec}$ is a vector that minimizes difference between reconstructed prediction block $PU_Y$ and a block in a reference frame pointed by this motion vector. It can be searched by motion estimation or modification of motion estimation, wherein the cost function $J_{pred, SATD}$ is modified and does not involve the number of bits necessary to code the part or full information of motion. This can be performed by any adequate method known to persons skilled in video coding. The reconstruction motion vector $MV_{PUYrec}$ is assigned as the motion vector to the neighboring block $PU_y$ in step 405. Next $MV_{PUY}$ is scaled in step 406 and if the resulting $MV_{PUY}$ is not already on list $L_{MVXpred}$ of predictions then it is added as a candidate to the list $L_{MVXpred}$ of predictions in step 407. It is then checked in step 408 whether all neighboring prediction units $PU_Y$ have been analyzed and if not, the procedure moves to the next neighboring prediction unit $PU_Y$ in step 409. After all neighboring units are analyzed, additional generated MV can be included in list $L_{MVXpred}$ to fill all available list entries in step 410. Next in step 411 the best prediction for the currently analyzed unit $PU_X$ is selected from the list $L_{MVXpred}$ of candidate predictions generated in step 407 and the prediction number corresponding to that motion vector prediction is assigned for coding the current prediction unit $PU_X$ in step 412.

Therefore, the list of candidate predictions for the currently analyzed unit $PU_X$ includes standard motion vectors (i.e. determined according to HEVC rules) for blocks which do not satisfy the criteria (a MERGE mode and not a SKIP mode) and reconstruction motion vectors for blocks which are coded in the MERGE and not SKIP mode.

Since the actual motion vector values are not transmitted for the $PU_X$ unit, but a prediction number pointing to a particular neighboring unit $PU_Y$ from which the motion vector shall be used together with optional adjustment, it is necessary that the same functionality of determining a reconstruction prediction is implemented in the decoder prediction unit 251.

The decoder motion information unit 204 and the decoder prediction correction unit 251 operate jointly as shown in Fig. 5. For a current prediction unit $PU_X$ identified in step 501 the neighboring prediction unit $PU_Y$ from which the motion vector shall be selected is read from the encoded bit stream. It is then checked in step 503 whether the neighboring unit $PU_Y$ has been encoded in a MERGE and not SKIP mode. If so, a reconstruction motion vector $MV_{PUYrec}$ is determined in step 404 in the same way as in step 304 of the encoder operation procedure. The reconstruction motion vector $MV_{PUYrec}$ is assigned as the motion vector to the neighboring block $PU_Y$ in step 505. Then in step 507 the motion vector $MV_{PUY}$ is scaled in a way corresponding to the scaling in step 406 in the encoder. Then, in step 507 the resulting motion vector $MV_{PUY}$ is used to decode $PU_X$. Therefore, as a result, the current prediction block $PU_X$ is decoded using the scaled motion vector $MV_{PUY}$, which is either a motion vector determined according to HEVC rules for $PU_Y$ units which have not been encoded in the MERGE and not SKIP mode or a reconstruction motion vector for units which have been encoded in the MERGE and not SKIP mode.

The procedures shown in Figs. 4 and 5 are used to correct the negative effect of the HEVC standard resulting from using motion vector predictions for frames encoded in the MERGE and not SKIP mode as predictions for further frames. This results in propagation of motion vector prediction to further prediction units. Experiments carried out on typical video streams have shown that up to 10% of blocks are encoded in a MERGE and not SKIP mode. The procedure is optimized to be carried out for a limited number of frames only, wherein there is most probability of bandwidth reduction. If these frames are encoded according to a standard procedure (i.e. such as shown in fig. 4 but without steps 403, 404 and 405), the not-corrected prediction of the neighboring frame would be used to code the current frame, which would make it necessary to use extra bandwidth for transmitting residual signal. By calculating a reconstructed motion vector $MV_{PUYrec}$, the current block is coded with a better-matched motion vector and so less information is needed to transmit residue information. Since the procedure is carried out both in the encoder and decoder, the signal is decoded correctly. Tests have shown an improvement of bandwidth of up to 1% while the encoder computing effort was increased only by up to 3% for the tested video signals.

**Claims**

1. A computer-implemented method for video signal encoding with motion estimation, the video signal comprising frames divided into prediction units, the method comprising the steps of:

   - determining (401) a current prediction unit ($PU_X$) to be encoded,
   - creating (407) a list ($L_{MVXpred}$) comprising motion vector predictions ($MV_{PUY}$) from neighboring units ($PU_Y$),
   - selecting (411) from the list ($L_{MVXpred}$) the motion vector prediction which is the best according to a predetermined cost function for encoding the current prediction unit ($PU_X$)
   - using (412) the selected prediction number to encode the current prediction unit ($PU_X$)

   **characterized by** further comprising the steps of:

   - for each neighboring unit ($PU_Y$), checking (403) whether the neighboring unit ($PU_Y$) has been encoded in the MERGE and not SKIP mode and if so,
   - determining (404) a reconstruction motion vector ($MV_{PUYrec}$) for that unit ($PU_Y$) as a motion vector which minimizes difference between reconstructed prediction block ($PU_Y$) and a block in a reference frame pointed by this motion vector, and
   - assigning (405) the reconstruction motion vector ($MV_{PUYrec}$) as a motion vector ($MV_{PUY}$) to that unit ($PU_Y$) to be used in creating (407) the list ($L_{MVXpred}$);
   - wherein in the MERGE mode of encoding, the neighboring unit ($PU_Y$) has a motion vector correction $dMV_Y$ equal to zero;
   - and wherein in the not SKIP mode of encoding, residual signal is sent for the neighbouring unit ($PU_Y$).

2. A computer program comprising program code means for performing all the steps of the method according to claim 1 when said program is run on a computer.

3. A computer-implemented method for video signal decoding with motion estimation, the video signal comprising frames divided into prediction units, the method comprising the steps of:

   - determining (501) a current prediction unit ($PU_X$) to be decoded,
   - determining (502) from the encoded stream information a neighboring unit ($PU_Y$) whose motion vector shall be used to decode the current prediction unit ($PU_X$),

- using (507) the motion vector ($MV_{PUY}$) of the neighboring unit ($PU_Y$) to decode motion information in the current prediction unit ($PU_X$),

**characterized by** further comprising the steps of:

- checking (503) whether the neighboring unit ($PU_Y$) has been encoded in the MERGE and not SKIP mode and if so,
- determining (504) a reconstruction motion vector ($MV_{PUYrec}$) for that unit ($PU_Y$) as a motion vector which minimizes difference between reconstructed prediction block ($PU_Y$) and a block in a reference frame pointed by this motion vector, and
- assigning (505) the reconstruction motion vector ($MV_{PUYrec}$) as a motion vector ($MV_{PUY}$) to that unit ($PU_Y$) to be used in decoding the current prediction unit ($PU_X$) motion information
- wherein in the MERGE mode of encoding, the neighboring unit ($PU_Y$) has a motion vector correction $dMV_Y$ equal to zero;
- and wherein in the not SKIP mode of encoding, residual signal is sent for the neighbouring unit ($PU_Y$).

4. A computer program comprising program code means for performing all the steps of the method according to claim 3 when said program is run on a computer.

5. A computer-implemented method for transmitting a video signal, comprising the steps of encoding the video signal according to the method of claim 1 and decoding the video signal according to the method of claim 3.

6. A video signal encoder utilizing motion estimation, the video signal comprising frames divided into prediction units, the encoder comprising:

   - a motion estimation unit (104) configured to:

     - determine (401) a current prediction unit ($PU_X$) to be encoded,
     - create (407) a list ($L_{MVXpred}$) comprising motion vector predictions ($MV_{PUY}$) from neighboring units ($PU_Y$),
     - select (411) from the list ($L_{MVXpred}$) the motion vector prediction which is the best according to a predetermined cost function for encoding the current prediction unit ($PU_X$),
     - use (412) the selected prediction number to encode the current prediction unit ($PU_X$)

**characterized in that** it further comprises:

   - a prediction correction unit (151) configured to:

- for each neighboring unit ($PU_Y$), check (403) whether the neighboring unit ($PU_Y$) has been encoded in the MERGE and not SKIP mode and if so,
- determine (404) a reconstruction motion vector ($MV_{PUYrec}$) for that unit ($PU_Y$) as a motion vector which minimizes difference between reconstructed prediction block ($PU_Y$) and a block in a reference frame pointed by this motion vector, and
- assign (405) the reconstruction motion vector ($MV_{PUYrec}$) as a motion vector ($MV_{PUY}$) to that unit ($PU_Y$) to be used in creating (407) the list ($L_{MVXpred}$);
- wherein in the MERGE mode of encoding, the neighboring unit ($PU_Y$) has a motion vector correction $dMV_Y$ equal to zero;
- and wherein in the not SKIP mode of encoding, residual signal is sent for the neighbouring unit ($PU_Y$).

7. A video signal decoder utilizing motion estimation, the video signal comprising frames divided into prediction units, the decoder comprising:

   - a motion estimation unit (204) configured to:

     - determine (501) a current prediction unit ($PU_X$) to be decoded,
     - determine (502) from the encoded stream information a neighboring unit ($PU_Y$) whose motion vector shall be used to decode the current prediction unit ($PU_X$),
     - use (507) the motion vector ($MV_{PUY}$) of the neighboring unit ($PU_Y$) to decode motion information in the current prediction unit ($PU_X$),

**characterized in that** it further comprises:

   - a prediction correction unit (251) configured to:

     - check (503) whether the neighboring unit ($PU_Y$) has been encoded in a MERGE and not SKIP mode and if so,
     - determine (504) a reconstruction motion vector ($MV_{PUYrec}$) for that unit ($PU_Y$) as a motion vector which minimizes difference between reconstructed prediction block ($PU_Y$) and a block in a reference frame pointed by this motion vector, and
     - assign (505) the reconstruction motion vector ($MV_{PUYrec}$) as a motion vector ($MV_{PUY}$) to that unit ($PU_Y$) to be used in decoding the current prediction unit ($PU_X$);
     - wherein in the MERGE mode of encoding, the neighboring unit ($PU_Y$) has a motion vector correction $dMV_Y$ equal to zero;

- and wherein in the not SKIP mode of encoding, residual signal is sent for the neighbouring unit (PU$_Y$).

8. A video signal transmission system, comprising the video signal encoder according to claim 6 and the video signal decoder according to claim 7.

**Patentansprüche**

1. Computer implementiertes Verfahren zur Videosignalcodierung mit Bewegungsschätzung, wobei das Videosignal Frames umfasst, die in Prädiktionseinheiten unterteilt sind, wobei das Verfahren folgende Schritte umfasst:

    - Bestimmen (401) einer aktuell zu codierenden Prädiktionseinheit (PU$_X$),
    - Erzeugen (407) einer Liste (L$_{MVXpred}$), die Bewegungsvektorprädiktionen (MV$_{PUY}$) von benachbarten Einheiten (PU$_Y$) umfasst,
    - Auswählen (411) der Bewegungsprädiktion aus der Liste (L$_{MVXpred}$), die gemäß einer vorbestimmten Kostenfunktion am besten ist für die Codierung der aktuellen Prädiktionseinheit (PU$_X$),
    - Verwenden (412) der ausgewählten Prädiktionsnummer zum Codieren der aktuellen Prädiktionseinheit (PU$_X$),

    **dadurch gekennzeichnet, dass** das Verfahren ferner die folgenden Schritte umfasst:

    - für jede benachbarte Einheit (PU$_Y$) Prüfen (403), ob die benachbarte Einheit (PU$_Y$) in dem Modus MERGE und dem nicht SKIP-Modus codiert ist, und wenn dies so ist:

        - Bestimmen (404) eines Rekonstruktionsbewegungsvektors (MV$_{PUYrec}$) für diese Einheit (PU$_Y$) als einen Bewegungsvektor, der die Differenz zwischen einem rekonstruierten Prädiktionsblock (PU$_Y$) und einem Block in einem Referenz-Frame minimiert, auf den dieser Bewegungsvektor zeigt, und
        - Zuordnen (405) des Rekonstruktionsbewegungsvektors (MV$_{PUYrec}$) als einen Bewegungsvektor (MV$_{PUY}$) zu dieser Einheit (PU$_Y$) zur Verwendung beim Erzeugen (407) der Liste (L$_{MVXpred}$),
        - wobei die benachbarte Einheit (PU$_Y$) in dem Modus MERGE der Codierung eine Bewegungsvektorkorrektur dMV$_Y$ aufweist, die gleich Null ist;
        - und wobei in dem nicht SKIP-Modus der Codierung Restsignal für die benachbarte Einheit (PU$_Y$) gesendet wird.

2. Computerprogramm, umfassend Programmcodemittel zum Ausführen aller Schritte des Verfahrens aus Anspruch 1, wenn das Programm auf einem Computer ausgeführt wird.

3. Computer implementiertes Verfahren zur Videosignaldecodierung mit Bewegungsschätzung, wobei das Videosignal Frames umfasst, die in Prädiktionseinheiten unterteilt sind, wobei das Verfahren folgende Schritte umfasst:

    - Bestimmen (501) einer aktuell zu decodierenden Prädiktionseinheit (PU$_X$),
    - Bestimmen (502) aus dem codierten Strom von Informationen einer benachbarten Einheit (PU$_Y$), deren Bewegungsvektor zum Decodieren der aktuellen Prädiktionseinheit (PU$_X$) verwendet werden soll,
    - Verwenden (507) des Bewegungsvektors (MV$_{PUY}$) der benachbarten Einheit (PU$_Y$) zum Decodieren von Bewegungsinformationen in der aktuellen Prädiktionseinheit (PU$_X$),

    **dadurch gekennzeichnet, dass** das Verfahren ferner die folgenden Schritte umfasst:

    - Prüfen (503), ob die benachbarte Einheit (PU$_Y$) in dem Modus MERGE und dem nicht SKIP-Modus codiert ist, und wenn dies so ist:

        - Bestimmen (504) eines Rekonstruktionsbewegungsvektors (MV$_{PUYrec}$) für diese Einheit (PU$_Y$) als einen Bewegungsvektor, der die Differenz zwischen einem rekonstruierten Prädiktionsblock (PU$_Y$) und einem Block in einem Referenz-Frame minimiert, auf den dieser Bewegungsvektor zeigt, und
        - Zuordnen (505) des Rekonstruktionsbewegungsvektors (MV$_{PUYrec}$) als einen Bewegungsvektor (MV$_{PUY}$) zu dieser Einheit (PU$_Y$) zur Verwendung beim Decodieren der Bewegungsinformationen der aktuellen Prädiktionseinheit (PU$_X$);
        - wobei die benachbarte Einheit (PU$_Y$) in dem Modus MERGE der Codierung eine Bewegungsvektorkorrektur dMV$_Y$ aufweist, die gleich Null ist;
        - und wobei in dem nicht SKIP-Modus der Codierung Restsignal für die benachbarte Einheit (PU$_Y$) gesendet wird.

4. Computerprogramm, umfassend Programmcodemittel zum Ausführen aller Schritte des Verfahrens aus Anspruch 3, wenn das Programm auf einem Computer ausgeführt wird.

5. Computer implementiertes Verfahren zur Übermittlung eines Videosignals, umfassend die Schritte des Codierens des Videosignals gemäß dem Verfahren nach Anspruch 1 sowie des Decodierens des Videosignals gemäß dem Verfahren nach Anspruch 3.

6. Videosignalcodierer unter Verwendung von Bewegungsschätzung, wobei das Videosignal Frames umfasst, die in Prädiktionseinheiten unterteilt sind, wobei der Codierer folgendes umfasst:

  - eine Einheit zur Bewegungsschätzung (104), die für folgendes konfiguriert ist:

    - Bestimmen (401) einer aktuell zu codierenden Prädiktionseinheit ($PU_X$),
    - Erzeugen (407) einer Liste ($L_{MVXpred}$), die Bewegungsvektorprädiktionen ($MV_{PUY}$) von benachbarten Einheiten ($PU_Y$) umfasst,
    - Auswählen (411) der Bewegungsprädiktion aus der Liste ($L_{MVXpred}$), die gemäß einer vorbestimmten Kostenfunktion am besten ist für die Codierung der aktuellen Prädiktionseinheit ($PU_X$),
    - Verwenden (412) der ausgewählten Prädiktionsnummer zum Codieren der aktuellen Prädiktionseinheit ($PU_X$),

  **dadurch gekennzeichnet, dass** das der Codierer ferner folgendes umfasst:

    - eine Prädiktionskorrektureinheit (151), die für folgendes konfiguriert ist:

      - für jede benachbarte Einheit ($PU_Y$) Prüfen (403), ob die benachbarte Einheit ($PU_Y$) in dem Modus MERGE und dem nicht SKIP-Modus codiert ist, und wenn dies so ist:
      - Bestimmen (404) eines Rekonstruktionsbewegungsvektors ($MV_{PUYrec}$) für diese Einheit ($PU_Y$) als einen Bewegungsvektor, der die Differenz zwischen einem rekonstruierten Prädiktionsblock ($PU_Y$) und einem Block in einem Referenz-Frame minimiert, auf den dieser Bewegungsvektor zeigt, und
      - Zuordnen (405) des Rekonstruktionsbewegungsvektors ($MV_{PUYrec}$) als einen Bewegungsvektor ($MV_{PUY}$) zu dieser Einheit ($PU_Y$) zur Verwendung beim Erzeugen (407) der Liste ($L_{MVXpred}$);
      - wobei die benachbarte Einheit ($PU_Y$) in dem Modus MERGE der Codierung eine Bewegungsvektorkorrektur $dMV_Y$ aufweist, die gleich Null ist;
      - und wobei in dem nicht SKIP-Modus der Codierung Restsignal für die benachbarte Einheit ($PU_Y$) gesendet wird.

7. Videosignaldecodierer unter Verwendung von Bewegungsschätzung, wobei das Videosignal Frames umfasst, die in Prädiktionseinheiten unterteilt sind, wobei der Decodierer folgendes umfasst:

  - eine Einheit zur Bewegungsschätzung (204), die für folgendes konfiguriert ist:

    - Bestimmen (501) einer aktuell zu decodierenden Prädiktionseinheit ($PU_X$),
    - Bestimmen (502) aus dem codierten Strom von Informationen einer benachbarten Einheit ($PU_Y$), deren Bewegungsvektor zum Decodieren der aktuellen Prädiktionseinheit ($PU_X$) verwendet werden soll,
    - Verwenden (507) des Bewegungsvektors ($MV_{PUY}$) der benachbarten Einheit ($PU_Y$) zum Decodieren von Bewegungsinformationen in der aktuellen Prädiktionseinheit ($PU_X$),

  **dadurch gekennzeichnet, dass** der Decodierer ferner folgendes umfasst:

    - eine Prädiktionskorrektureinheit (251), die für folgendes konfiguriert ist:

      - Prüfen (503), ob die benachbarte Einheit ($PU_Y$) in dem Modus MERGE und dem nicht SKIP-Modus codiert ist, und wenn dies so ist:
      - Bestimmen (504) eines Rekonstruktionsbewegungsvektors ($MV_{PUYrec}$) für diese Einheit ($PU_Y$) als einen Bewegungsvektor, der die Differenz zwischen einem rekonstruierten Prädiktionsblock ($PU_Y$) und einem Block in einem Referenz-Frame minimiert, auf den dieser Bewegungsvektor zeigt, und
      - Zuordnen (505) des Rekonstruktionsbewegungsvektors ($MV_{PUYrec}$) als einen Bewegungsvektor ($MV_{PUY}$) zu dieser Einheit ($PU_Y$) zur Verwendung beim Decodieren der Bewegungsinformationen der aktuellen Prädiktionseinheit ($PU_X$);
      - wobei die benachbarte Einheit ($PU_Y$) in dem Modus MERGE der Codierung eine Bewegungsvektorkorrektur $dMV_Y$ aufweist, die gleich Null ist;
      - und wobei in dem nicht SKIP-Modus der Codierung Restsignal für die benachbarte Einheit ($PU_Y$) gesendet wird.

8. Videosignalübermittlungssystem, umfassend den Videosignalcodierer nach Anspruch 6 und den Videosignaldecodierer nach Anspruch 7.

**Revendications**

1. Procédé implémenté par ordinateur pour le codage de signal vidéo avec estimation de mouvement, le signal vidéo comprenant des trames divisées en unités de prédiction, le procédé comprenant les étapes consistant à :

déterminer (401) une unité de prédiction actuelle (PU$_X$) à coder,
créer (407) une liste (L$_{MVXpred}$) comprenant des prédictions de vecteur de mouvement (MV$_{PUY}$) à partir d'unités voisines (PU$_Y$),
sélectionner (411) dans la liste (L$_{MVXpred}$) la prédiction de vecteur de mouvement qui est la meilleure selon une fonction de coût prédéterminée pour coder l'unité de prédiction actuelle (PU$_X$)
utiliser (412) le numéro de prédiction sélectionnée pour coder l'unité de prédiction actuelle (PU$_X$)

**caractérisé en ce qu'**il comprend en outre les étapes consistant à :

pour chaque unité voisine (PU$_Y$), vérifier (403) si l'unité voisine (PU$_Y$) a été codée en mode MERGE et non SKIP et si oui,
déterminer (404) un vecteur de mouvement de reconstruction (MV$_{PUYrec}$) pour cette unité (PU$_Y$) comme vecteur de mouvement qui réduit au minimum la différence entre le bloc de prédiction reconstruit (PU$_Y$) et un bloc dans une trame de référence pointée par ce vecteur de mouvement, et
attribuer (405) le vecteur de mouvement de reconstruction (MV$_{PUYrec}$) comme vecteur de mouvement (MV$_{PUY}$) à cette unité (PU$_Y$) à utiliser en créant (407) la liste (L$_{MVXpred}$) ;
en mode de codage MERGE, l'unité voisine (PU$_Y$) ayant une correction de vecteur de mouvement dMV$_Y$ égale à zéro ;
et en mode de codage non SKIP, un signal résiduel étant envoyé pour l'unité voisine (PU$_Y$).

2. Programme informatique comprenant des moyens de code de programme pour exécuter toutes les étapes du procédé selon la revendication 1 lorsque ledit programme est exécuté sur un ordinateur.

3. Procédé implémenté par ordinateur pour le décodage de signal vidéo avec estimation de mouvement, le signal vidéo comprenant des trames divisées en unités de prédiction, le procédé comprenant les étapes consistant à :

déterminer (501) une unité de prédiction actuelle (PU$_X$) à décoder,

déterminer (502) à partir des informations de flux codées une unité voisine (PU$_Y$) dont le vecteur de mouvement doit être utilisé pour décoder l'unité de prédiction actuelle (PU$_X$),
utiliser (507) le vecteur de mouvement (MV$_{PUY}$) de l'unité voisine (PU$_Y$) pour décoder les informations de mouvement dans l'unité de prédiction actuelle (PU$_X$),

**caractérisé en ce qu'**il comprend en outre les étapes consistant à :

vérifier (503) si l'unité voisine (PU$_Y$) a été codée en mode MERGE et non SKIP et si oui,
déterminer (504) un vecteur de mouvement de reconstruction (MV$_{PUYrec}$) pour cette unité (PU$_Y$) comme vecteur de mouvement qui réduit au minimum la différence entre le bloc de prédiction reconstruit (PU$_Y$) et un bloc dans une trame de référence pointée par ce vecteur de mouvement, et
attribuer (505) le vecteur de mouvement de reconstruction (MV$_{PUYrec}$) comme vecteur de mouvement (MV$_{PUY}$) à cette unité (PU$_Y$) à utiliser en décodant les informations de mouvement de l'unité de prédiction actuelle (PU$_X$) ;
en mode de codage MERGE, l'unité voisine (PU$_Y$) ayant une correction de vecteur de mouvement dMV$_Y$ égale à zéro ;
et en mode de codage non SKIP, un signal résiduel étant envoyé pour l'unité voisine (PU$_Y$).

4. Programme informatique comprenant des moyens de code de programme pour exécuter toutes les étapes du procédé selon la revendication 3 lorsque ledit programme est exécuté sur un ordinateur.

5. Procédé implémenté par ordinateur pour transmettre un signal vidéo, comprenant les étapes consistant à coder le signal vidéo selon le procédé de la revendication 1 et à décoder le signal vidéo selon le procédé de la revendication 3.

6. Codeur de signal vidéo utilisant une estimation de mouvement, le signal vidéo comprenant des trames divisées en unités de prédiction, le codeur comprenant :

une unité d'estimation de mouvement (104) conçue pour :

déterminer (401) une unité de prédiction actuelle (PU$_X$) à coder,
créer (407) une liste (L$_{MVXpred}$) comprenant des prédictions de vecteur de mouvement (MV$_{PUY}$) à partir d'unités voisines (PU$_Y$),
sélectionner (411) dans la liste (L$_{MVXpred}$) la prédiction de vecteur de mouvement qui est la meilleure selon une fonction de coût prédéterminée pour coder l'unité de prédiction actuelle ($PU_X$)

utiliser (412) le numéro de prédiction sélectionnée pour coder l'unité de prédiction actuelle ($PU_X$)

**caractérisé en ce qu'**il comprend en outre :

une unité de correction de prédiction (151) conçue pour :

pour chaque unité voisine ($PU_Y$), vérifier (403) si l'unité voisine ($PU_Y$) a été codée en mode MERGE et non SKIP et si oui, déterminer (404) un vecteur de mouvement de reconstruction ($MV_{PUYrec}$) pour cette unité ($PU_Y$) comme vecteur de mouvement qui réduit au minimum la différence entre le bloc de prédiction reconstruit ($PU_Y$) et un bloc dans une trame de référence pointée par ce vecteur de mouvement, et attribuer (405) le vecteur de mouvement de reconstruction ($MV_{PUYrec}$) comme vecteur de mouvement ($MV_{PUY}$) à cette unité ($PU_Y$) à utiliser en créant (407) la liste ($L_{MVXpred}$) ; en mode de codage MERGE, l'unité voisine ($PU_Y$) ayant une correction de vecteur de mouvement $dMV_Y$ égale à zéro ; et en mode de codage non SKIP, un signal résiduel étant envoyé pour l'unité voisine ($PU_Y$).

7. Décodeur de signal vidéo utilisant une estimation de mouvement, le signal vidéo comprenant des trames divisées en unités de prédiction, le décodeur comprenant :

une unité d'estimation de mouvement (204) conçue pour :

déterminer (501) une unité de prédiction actuelle ($PU_X$) à décoder, déterminer (502) à partir des informations de flux codées une unité voisine ($PU_Y$) dont le vecteur de mouvement doit être utilisé pour décoder l'unité de prédiction actuelle ($PU_X$), utiliser (507) le vecteur de mouvement ($MV_{PUY}$) de l'unité voisine ($PU_Y$) pour décoder les informations de mouvement dans l'unité de prédiction actuelle ($PU_X$),

**caractérisé en ce qu'**il comprend en outre :

une unité de correction de prédiction (251) conçue pour :

vérifier (503) si l'unité voisine ($PU_Y$) a été codée en mode MERGE et non SKIP et si oui, déterminer (504) un vecteur de mouvement de reconstruction ($MV_{PUYrec}$) pour cette unité ($PU_Y$) comme vecteur de mouvement qui réduit au minimum la différence entre le bloc de prédiction reconstruit ($PU_Y$) et un bloc dans une trame de référence pointée par ce vecteur de mouvement, et attribuer (505) le vecteur de mouvement de reconstruction ($MV_{PUYrec}$) comme vecteur de mouvement ($MV_{PUY}$) à cette unité ($PU_Y$) à utiliser en décodant l'unité de prédiction actuelle ($PU_X$) ; en mode de codage MERGE, l'unité voisine ($PU_Y$) ayant une correction de vecteur de mouvement $dMV_Y$ égale à zéro ; et en mode de codage non SKIP, un signal résiduel étant envoyé pour l'unité voisine ($PU_Y$).

8. Système de transmission de signal vidéo, comprenant le codeur de signal vidéo selon la revendication 6 et le décodeur de signal vidéo selon la revendication 7.

**Fig. 1**

**Fig. 2**

**Fig. 3**

401

Determine PU$_X$

402

Determine
neighboring PU$_Y$

403

MERGE and not SKIP?

No          Yes

404

Determine MV$_{PUYrec}$

405

MV$_{PUY}$ = MV$_{PUYrec}$

406

Scale MV$_{PUY}$

407

L$_{MVPXpred}$ += MV$_{PUY}$

408

All neighbouring PU$_Y$
analyzed?

No          Yes

409

Move to the next
neighboring PU$_Y$

410

Fill in the list
L$_{MVPXpred}$

411

Select the best
prediction for PU$_X$ from
L$_{MVPXpred}$ list

**Fig. 4**

412

Use the selected
prediction number
to encode PU$_X$

**Fig. 5**

**EP 2 699 001 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011176611 A
- US 2012134416 A
- US 2012128060 A
- US 2011002390 A
- WO 2011047994 A
- US 20120230397 A

**Non-patent literature cited in the description**

- **B. BROSS et al.** High Efficiency Video Coding (HEVC) text specification draft 10 (for FDIS & Consent). *JCTVC-L1003, Geneva,* January 2013